# FASCICULE DE BREVET EUROPEEN

(11) **EP 2 393 693 B1**
(45) Date de publication et mention de la délivrance du brevet: **20.03.2013**
(21) Numéro de dépôt: 10707585.5
(22) Date de dépôt: 26.01.2010
(51) Int. Cl.: B60R 19/26, B62D 21/15, B62D 25/08

(54) **STRUCTURE DE L'AVANT DE LA CAISSE D'UN VEHICULE AUTOMOBILE ET VEHICULE COMPORTANT UNE TELLE STRUCTURE**
STRUKTUR FÜR DIE VORDERSEITE EINER AUTOMOBILKAROSSERIE UND AUTOMOBIL MIT EINER SOLCHEN STRUKTUR
STRUCTURE FOR THE FRONT OF AN AUTOMOBILE BODY, AND AUTOMOBILE INCLUDING SUCH A STRUCTURE

(30) Priorité: 06.02.2009 FR 0950740
(43) Date de publication de la demande: 14.12.2011
(73) Titulaire: Peugeot Citroën Automobiles SA, 78140 Vélizy-Villacoublay (FR)
(72) Inventeur: BENANE, Saïd, F-94550 Chevilly Larue (FR)
(74) Mandataire: Fernandez, Francis Lionel
(86) Numéro de dépôt international: PCT/FR2010/050111
(87) Numéro de publication internationale: WO 2010/089489

(56) Documents cités:
- EP-A- 1 568 552
- EP-A- 1 619 089
- EP-A- 1 859 983
- EP-A- 1 930 230
- WO-A-2009/013416

## Description

La présente invention concerne une structure de l'avant de la caisse d'un véhicule automobile.

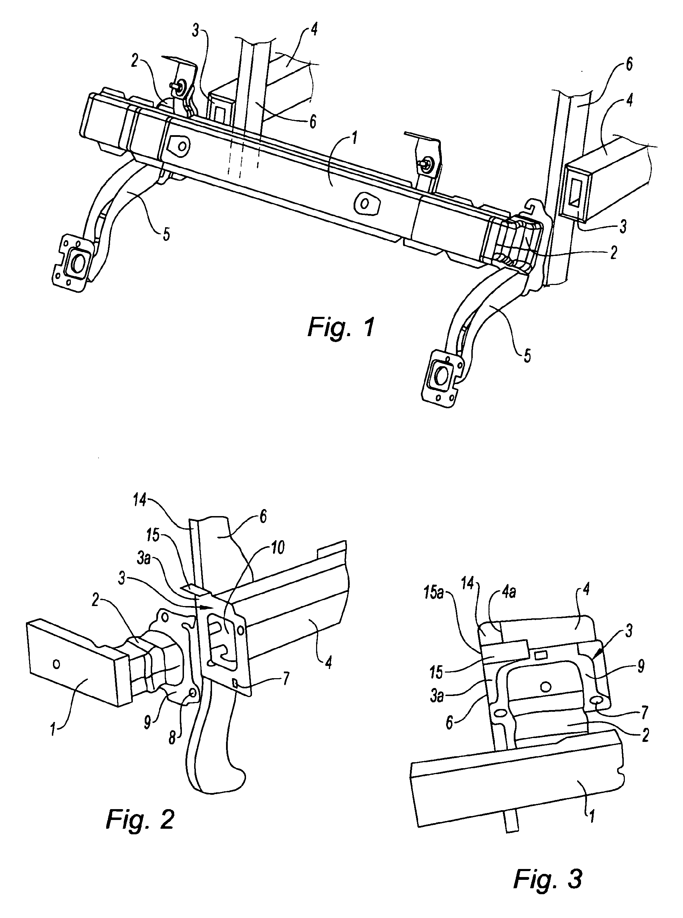

La structure de l'avant de la caisse d'un véhicule automobile comprend, comme montré sur la vue en perspective éclatée de la figure 1, une poutre transversale 1 dont chacune des deux extrémités est reliée à un absorbeur de choc 2.

En position montée, chacun des absorbeurs de choc 2 prend appui sur une platine 3 fixée à l'arrière de l'absorbeur 2 et à l'extrémité avant de chacun des deux longerons 4 également appelés brancards.

Dans l'exemple représenté sur la figure 1, la poutre 1 porte également deux bretelles 5 s'étendant vers le bas dont l'extrémité inférieure est destinée à porter une poutre inférieure d'absorption des chocs dits « chocs piétons ».

Par ailleurs, un élément 6 appelé élément de demi-façade fixé sur la face latérale intérieure de chaque longeron 4 s'étend verticalement près de l'extrémité avant du longeron 4.

Dans ce mode de réalisation, il n'existe aucune liaison entre la platine 3 et l'élément de demi-façade 6.

Lors de l'étude d'un nouveau véhicule, la structure ci-dessus est testée lors d'un choc à une vitesse de 16 km/h contre un mur incliné de 10° par rapport à la trajectoire du véhicule, le recouvrement de l'avant du véhicule avec le mur étant égal à 40%.

A la suite d'un tel choc, les dégâts subis par le véhicule sont évalués et les frais de réparation sont chiffrés.

Le but de ces tests est de réaliser une structure de l'avant de la caisse du véhicule qui soit apte à absorber les chocs frontaux à faible vitesse et qui soit réparable facilement et à moindres frais.

Or, la structure actuelle de l'avant de la caisse des véhicules automobiles ne permet pas d'éviter, en cas de choc du type décrit ci-dessus, une rotation de l'absorbeur autour d'un axe vertical qui peut entraîner des coûts élevés de réparation.

Le document EP 1 839 959 décrit une platine fixée sur l'extrémité d'un longeron avant servant d'appui pour un absorbeur de choc.

Cette platine comporte une extension latérale renforcée par des nervures destinée à être fixée sur l'extrémité d'une traverse reliant les deux longerons.

Cette traverse confère à la platine une rigidité optimale en cas de choc du type évoqué ci-dessus.

Cependant, la présence d'une traverse augmente le coût de la structure.

Par ailleurs, le document ci-dessus n'évoque pas la présence et la position d'éléments de demi-façade tels que ceux représentés sur la figure 1.

Par ailleurs, le document EP 1930 230 A décrit une structure avant de la caisse d'un véhicule automobile telle que décrite par le préambule de la revendication 1.

Le but de la présente invention est de remédier aux inconvénients des structures connues, telles que décrites ci-dessus.

Ce but est atteint, selon l'invention, grâce à une structure de l'avant de la caisse d'un véhicule automobile comprenant une poutre transversale dont chacune des deux extrémités est reliée à un absorbeur de choc portant à son extrémité arrière une platine fixée sur l'extrémité de l'un des deux longerons avant, un élément de demi-façade fixé sur la face latérale intérieure de chaque longeron s'étendant sensiblement verticalement près de l'extrémité avant du longeron, caractérisée en ce que ladite platine comporte une extension latérale qui recouvre partiellement ledit élément de demi-façade.

Le recouvrement entre l'extension latérale de la platine et l'élément de demi-façade permet d'augmenter la rigidité de l'appui de la platine sur l'extrémité du longeron et sur l'élément de demi-façade, ce qui permet d'éviter la rotation de l'absorbeur en cas de choc à faible vitesse du type évoqué plus haut et par conséquent de réduire le coût des réparations.

De préférence, ledit élément de demi-façade comporte une bordure avant pliée s'étendant sensiblement dans le plan de jonction entre ladite platine et l'extrémité du longeron, ladite extension latérale de la platine recouvrant partiellement ladite bordure avant.

Selon une version particulièrement avantageuse de l'invention, l'extension latérale de la platine recouvre totalement ladite bordure avant pliée dans le sens de la largeur de celle-ci et recouvre partiellement cette bordure dans le sens de la longueur de celle-ci.

De préférence également, la zone de recouvrement entre la platine et ladite bordure avant pliée est située dans un coin supérieur de la platine.

Avantageusement, l'un des bords de la patte est situé sensiblement au droit du bord libre de ladite bordure et la longueur de la patte est supérieure à la largeur de ladite bordure.

A titre d'exemple non limitatif, ladite platine est en acier et peut présenter une épaisseur comprise entre 2 et 4 mm.

A titre d'exemple également, la surface de recouvrement entre ladite extension latérale de la platine et ladite bordure de l'élément de demi-façade présente une largeur comprise entre 10 et 30 mm et une hauteur comprise entre 40 et 80 mm.

L'invention concerne également un véhicule automobile dont la caisse présente une structure selon l'invention.

D'autres particularités et avantages de l'invention apparaîtront encore tout au long de la description ci-après.

Aux dessins annexés, donnés à titre d'exemples, non limitatifs :
- la figure 2 est une vue en perspective éclatée montrant les éléments essentiels de la structure avant selon l'invention,
- la figure 3 est une autre vue en perspective montrant le dessus de la structure représentée sur la figure 2, les éléments étant assemblés,
- la figure 4 est une vue montrant la face avant de la platine de la structure selon l'invention,
- la figure 5 est une vue en perspective montrant la face arrière de la platine représentée sur la figure 4,
- la figure 6 est une autre vue en perspective de la structure représentée sur les figures 2 et 3,
- la figure 7 est une vue de l'arrière de la structure selon l'invention,
- la figure 8 est une vue de dessus de la structure,
- la figure 9 est une vue de dessus à échelle réduite de la structure avant un choc contre un mur incliné de 10°,
- la figure 10 est une vue analogue à la figure 9 à échelle légèrement agrandie montrant l'état de la structure après choc contre le mur.

La structure de l'avant de la caisse d'un véhicule automobile représentée sur les figures 2, 3 et 6 à 10 comporte, comme dans le cas de la structure connue représentée sur la figure 1, une poutre transversale avant 1 dont les extrémités sont fixées chacune sur un absorbeur de choc 2 dont l'extrémité arrière est fixée sur une platine 3 qui est elle-même fixée sur l'extrémité avant d'un longeron 4.

La platine 3 est fixée à l'absorbeur 2 grâce à des vis (non représentées) traversant des trous tels que 7 formés dans la platine 3 ainsi que des trous tels que 8 formés dans une plaque 9 (voir figures 2 et 3) portée par l'extrémité arrière de l'absorbeur 2.

La platine 3 comporte un évidement central 10 (voir figures 2, 4 et 5) qui débouche à l'intérieur du longeron 4.

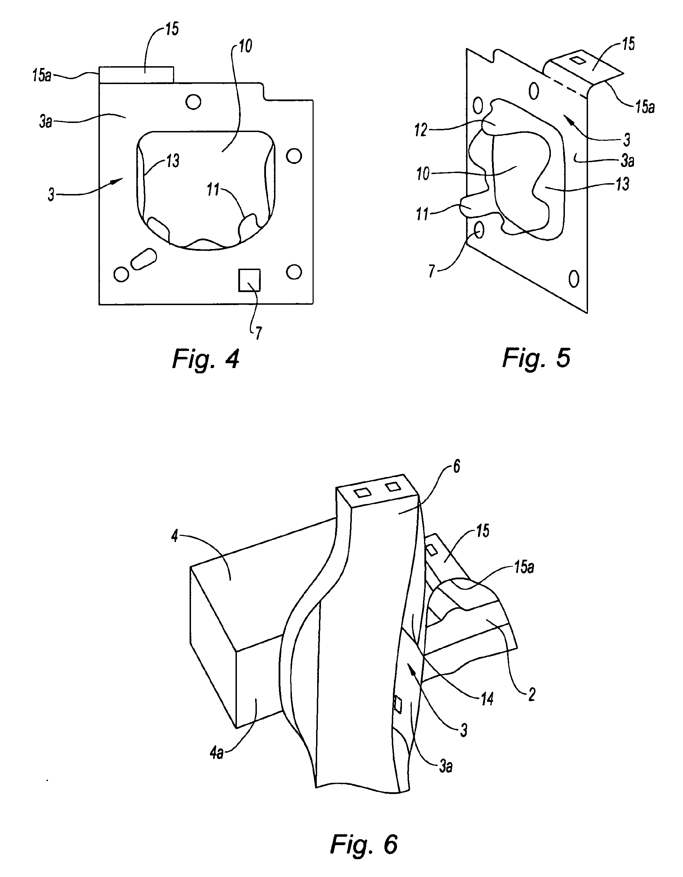

Le bord de cet évidement 10 porte des pattes repliées 11, 12, 13 (voir notamment la figure 5) qui sont soudées sur la surface extérieure du longeron 4.

En position assemblée, l'axe de l'absorbeur 2 est aligné avec celui du longeron 4 et cet axe est perpendiculaire à celui de la poutre transversale 1.

Par ailleurs, les figures 2, 3 et 6 à 9 montrent qu'un élément de demi-façade 6 est fixé contre la face latérale intérieure 4a du longeron 4 (voir notamment la figure 6).

Cet élément de demi-façade 6 s'étend dans une direction sensiblement verticale.

Cet élément de demi-façade 6 comporte une bordure avant 14 pliée à angle droit par rapport à sa face qui est fixée au longeron 4.

Cette bordure avant 14 s'étend sensiblement dans le plan de jonction entre la platine 3 et l'extrémité avant du longeron 4.

Conformément à l'invention, la platine 3 comporte une extension latérale 3a (voir notamment les figures 2, 3, 6, 7 et 8) qui recouvre au moins partiellement la bordure avant pliée 14 de l'élément de demi-façade 6.

Dans l'exemple montré par les figures ci-dessus, l'extension latérale 3a de la platine 3 recouvre totalement la bordure avant pliée 14 dans le sens de la largeur de celle-ci et recouvre partiellement cette bordure dans le sens de la longueur de celle-ci.

De plus, les figures ci-dessus montrent que la zone de recouvrement entre la platine 3 et la bordure avant pliée 14 de l'élément 6 est située dans un coin supérieur de la platine 3.

Par ailleurs, le bord supérieur de la platine 3 comporte dans la zone de son extension latérale 3a, une patte 15 repliée vers l'avant.

L'un 15a des bords de la patte 15 est situé sensiblement au droit du bord libre de la bordure pliée 14 et la longueur de la patte 15 mesurée dans la direction de son pli est supérieure à la largeur de la bordure 14.

Ainsi, le pli de la patte 15 s'étend non seulement sur la bordure 14 mais également sur une partie de l'extrémité du longeron 4.

A titre d'exemple, la platine 3 peut être en acier du type E390D et présenter une épaisseur comprise entre 2 et 4 mm.

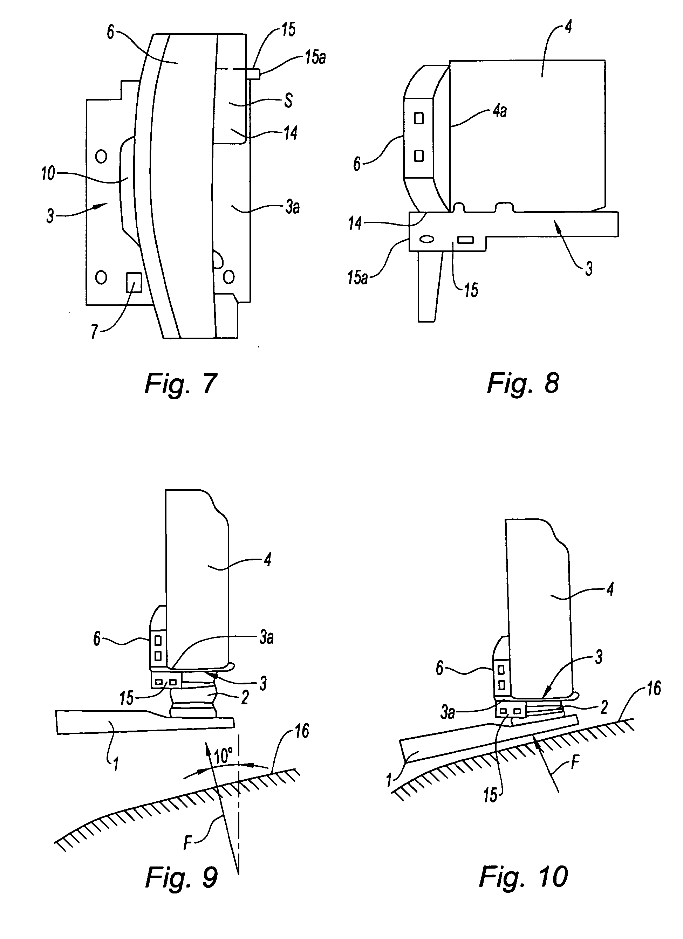

La surface de recouvrement S (voir figure 7) entre l'extension latérale 3a de la platine 3 et la bordure 14 de l'élément de demi-façade 6 peut par exemple présenter une largeur comprise entre 10 et 30 mm et une hauteur comprise entre 40 et 80 mm.

Les figures 9 et 10 représentent un mur 16 incliné de 16 contre lequel une structure selon l'invention est déplacée à une vitesse de 16 km/h pour tester son comportement lors du choc contre ce mur 16.

Lors de ce choc, une force F est appliquée contre la structure.

La figure 10 montre, qu'après le choc, l'absorbeur 2 s'est considérablement rétréci mais est resté dans l'axe du longeron 4.

Il n'a pas dévié par rapport à cet axe, grâce à la rigidité de la platine 3.

Cette rigidité de la platine 3 est principalement due au fait qu'elle comporte une extension latérale 3a qui s'appuie sur la bordure avant 14 de l'élément de demi-façade 6 et au renforcement constitué par la patte repliée 15 qui augmente la résistance à la flexion de la platine 3 dans la zone de recouvrement de cette platine avec la bordure 14 de l'élément 6.

Ainsi, seuls la poutre 1 et l'absorbeur 2 ont été endommagés par le choc et nécessitent d'être remplacés.

Le coût de la réparation est par conséquent réduit.

Le principal avantage de la présente invention réside dans le fait que l'amélioration du comportement de la structure selon l'invention, en cas de choc du type évoqué ci-dessus est obtenue simplement en modifiant une seule pièce de la structure, à savoir la platine 3, c'est-à-dire sans ajouter une pièce supplémentaire à cette structure.

## Revendications

1. Structure de l'avant de la caisse d'un véhicule automobile comprenant une poutre transversale (1) dont chacune des deux extrémités est reliée à un absorbeur de choc (2) portant à son extrémité arrière une platine (3) fixée sur l'extrémité de l'un (4) des deux longerons avant, un élément de demi-façade (6) fixé sur la face latérale intérieure (4a) de chaque longeron (4) s'étendant sensiblement verticalement près de l'extrémité avant du longeron (4), **caractérisée en ce que** ladite platine (3) comporte une extension latérale (3a) qui recouvre partiellement ledit élément de demi-façade (6) et **en ce que** le bord supérieur de la platine (3) comporte dans la zone de son extension latérale (3a) une patte (15) repliée vers l'avant afin d'augmenter la résistance à la flexion de la platine (3) dans la zone de recouvrement de cette platine avec ledit élément de demi-façade (6).

2. Structure selon la revendication 1, **caractérisée en ce que** ledit élément de demi-façade (6) comporte une bordure avant pliée (14) s'étendant sensiblement dans le plan de jonction entre ladite platine (3) et l'extrémité du longeron (4), ladite extension latérale (3a) de la platine (3) recouvrant partiellement ladite bordure avant (14).

3. Structure selon la revendication 2, **caractérisée en ce que** l'extension latérale (3a) de la platine (3) recouvre totalement ladite bordure avant pliée (14) dans le sens de la largeur de celle-ci et recouvre partiellement cette bordure (14) dans le sens de la longueur de celle-ci.

4. Structure selon l'une des revendications 2 ou 3, **caractérisée en ce que** la zone de recouvrement entre la platine (3) et ladite bordure avant pliée (14) est située dans un coin supérieur de la platine (3).

5. Structure selon la revendication 4, **caractérisée en ce que** l'un des bords de la patte (15) est situé sensiblement au droit du bord libre de ladite bordure (14) et la longueur de la patte (15) est supérieure à la largeur de ladite bordure (14).

6. Structure selon l'une des revendications 1 à 5, **caractérisée en ce que** ladite platine (3) est en acier et présente une épaisseur comprise entre 2 et 4 mm.

7. Structure selon l'une des revendications 2 à 6, **caractérisée en ce que** la surface de recouvrement entre ladite extension latérale (3a) de la platine (3) et ladite bordure (14) de l'élément de demi-façade (6) présente une largeur comprise entre 10 et 30 mm et une hauteur comprise entre 40 et 80 mm.

8. Véhicule automobile dont la caisse présente une structure selon l'une des revendications 1 à 7.

## Claims

1. Structure for the front of an automobile body including a crossbeam (1) two ends of which are each connected to a shock absorber (2) bearing at the rear end thereof a platen (3) secured to the end of one (4) of the two front rails, a half-panel element (6) secured on the inner side surface (4a) of each rail (4) extending substantially vertically in the vicinity of the front end of the rail (4), **characterised in that** said platen (3) comprises a side extension (3a) which partially covers said half-panel element (6) and **in that** the upper edge of the platen (3) comprises in the zone of the side extension (3a) thereof a lug (15) folded towards the front in order to increase the resistance of the bending of the platen (3) in the covering zone of this platen with said half-panel element (6).

2. Structure according to claim 1, **characterised in that** said half-panel element (6) comprises a folded front edge (14) extending substantially in the junction plane between said platen (3) and the end of the rail (4), said side extension (3a) of the platen (3) partially covers said front edge (14).

3. Structure according to claim 2, **characterised in that** the side extension (3a) of the platen (3) entirely covers said folded front edge (14) in the direction of the width of the latter and partially covers this edge (14) in the direction of the length of the latter.

4. Structure according to one of claims 2 or 3, **characterised in that** the covering zone between the platen (3) and said folded front edge (14) is located in an upper corner of the platen (3).

5. Structure according to claim 4, **characterised in that** one of the edges of the lug (15) is located substantially to the right of the free edge of said edge (14) and the length of the lug (15) is greater than the width of said edge (14).

6. Structure according to one of claims 1 to 5, **characterised in that** said platen (3) is made of steel and has a thickness between 2 and 4 mm.

7. Structure according to one of claims 2 to 6, **characterised in that** the covering surface between said side extension (3a) of the platen (3) and said edge (14) of the half-panel element (6) has a width between 10 and 30 mm and a height between 40 and 80 mm.

8. Automobile of which the body has a structure according to one of claims 1 to 7.

## Patentansprüche

1. Frontstruktur der Karosserie eines Kraftfahrzeugs, umfassend einen Querträger (1), dessen beide Enden mit einem Stoßabsorber (2) verbunden sind, der an seinem hinteren Ende eine Montageplatte (3) trägt, die am Ende des einen (4) der beiden vorderen Längsträger befestigt ist, ein Halbfassadenelement (6), das an der inneren Seitenfläche (4a) eines jeden Längsträgers (4) befestigt ist, und sich nahe dem vorderen Ende des Längsträgers (4) in eine etwa senkrechte Richtung erstreckt, **dadurch gekennzeichnet, dass** die besagte Montageplatte (3) eine seitliche Ausdehnung (3a) umfasst, die das besagte Halbfassadenelement (6) teilweise abdeckt, und dadurch, dass der obere Rand der Montageplatte (3) im Bereich seiner seitlichen Ausdehnung (3a) eine Lasche (15) umfasst, die nach vorne gebogen ist, um die Biegefestigkeit der Montageplatte (3) im Überdeckungsbereich dieser Montageplatte mit dem besagten Halbfassadenelement (6) zu erhöhen.

2. Struktur nach Anspruch 1, **dadurch gekennzeichnet, dass** das besagte Halbfassadenelement (6) eine vordere gebogene Kante (14) umfasst, die sich in etwa in der Verbindungsebene zwischen der besagten Montageplatte (3) und dem Ende des Längsträgers (4) erstreckt, und die besagte seitliche Ausdehnung (3a) der Montageplatte (3) die besagte vordere Kante (14) teilweise abdeckt.

3. Struktur nach Anspruch 2, **dadurch gekennzeichnet, dass** die seitliche Ausdehnung (3a) der Montageplatte (3) die besagte vordere gebogene Kante (14) in Richtung deren Breite vollständig überdeckt, und sie diese Kante (14) in Richtung deren Länge teilweise überdeckt.

4. Struktur nach einem der Ansprüche 2 oder 3, **dadurch gekennzeichnet, dass** sich der Überdeckungsbereich zwischen der Montageplatte (3) und der besagten vorderen gebogenen Kante (14) in einer oberen Ecke der Montageplatte (3) befindet.

5. Struktur nach Anspruch 4, **dadurch gekennzeichnet, dass** sich einer der Ränder der Lasche (15) in etwa längs vor dem freien Rand der besagten Kante (14) befindet und die Länge der Lasche (15) größer ist, als die Breite der besagten Kante (14).

6. Struktur nach einem der Ansprüche 1 bis 5, **dadurch gekennzeichnet, dass** die besagte Montageplatte (3) aus Stahl gefertigt ist und eine Stärke zwischen 2 und 4 mm aufweist.

7. Struktur nach einem der Ansprüche 2 bis 6, **dadurch gekennzeichnet, dass** die Überdeckungsfläche zwischen der besagten seitlichen Ausdehnung (3a) der Montageplatte (3) und der besagten Kante (14) des Halbfassadenelements (6) eine Breite zwischen 10 und 30 mm, und eine Höhe zwischen 40 und 80 mm aufweist.

8. Kraftfahrzeug, dessen Karosserie eine Struktur nach einem der Ansprüche 1 bis 7 aufweist.
